# EUROPÄISCHE PATENTSCHRIFT

(11) **EP 3 447 298 B1**
(45) Veröffentlichungstag und Bekanntmachung des Hinweises auf die Patenterteilung: **09.02.2022**
(21) Anmeldenummer: 17187107.2
(22) Anmeldetag: 21.08.2017
(51) Int. Cl.: F04D 19/04, F04D 29/66, F16L 27/111, F04D 29/64

(54) **DÄMPFUNGSKÖRPER ZUR VERBINDUNG EINE VAKUUMPUMPE**
VIBRATION DAMPER FOR COUPLING A VACUUMPUMPE
AMORTISSEUR POUR LE COUPLAGE D'UNE POMPE À VIDE

(43) Veröffentlichungstag der Anmeldung: 27.02.2019
(73) Patentinhaber: PFEIFFER VACUUM GMBH, 35614 Asslar (DE)
(72) Erfinder: Hofmann, Jan, 35305 Grünberg (DE); Mekota, Mirko, 35630 Ehringshausen (DE); Schill, Michael, 35614 Asslar-Bechlingen (DE); Stoll, Tobias, 35644 Hohenahr (DE)
(74) Vertreter: Manitz Finsterwald Patent- und Rechtsanwaltspartnerschaft mbB

(56) Entgegenhaltungen:
- WO-A1-2005/078288
- DE-A1- 19 745 185
- FR-A1- 2 741 418
- JP-A- 2015 132 373

## Beschreibung

Die vorliegende Erfindung betrifft einen Dämpfungskörper für eine schwingungsentkoppelte Verbindung einer Vakuumpumpe, insbesondere einer Turbomolekularpumpe, mit einem Rezipienten.

Eine schwingungsentkoppelte Verbindung ist zwischen einer Vakuumpumpe und einem Rezipienten erforderlich, wenn der Rezipient Komponenten umfasst, wie beispielsweise Messanordnungen, deren Betrieb durch die Schwingungen der Vakuumpumpe gestört werden würde. Ein Beispiel einer solchen Anordnung ist ein Elektronenmikroskop.

Die schwingungsentkoppelte Verbindung zwischen Rezipient und Vakuumpumpe wird üblicherweise mittels eines Dämpfungskörpers hergestellt, der zwischen der Vakuumpumpe und dem Rezipienten angeordnet und mit diesen verbunden ist. Ein solcher Dämpfungskörper weist daher einen pumpenseitigen Flansch zur Befestigung des Dämpfungskörpers an der Vakuumpumpe und einen rezipientenseitigen Flansch zur Befestigung des Dämpfungskörpers am Rezipienten auf. Zwischen dem pumpenseitigen und dem rezipientenseitigen Flansch ist üblicherweise ein Wellbalg angeordnet, der aus einem dünnen Metallmaterial besteht und eine vakuumdichte Verbindung zwischen dem pumpenseitigen und dem rezipientenseitigen Flansch herstellt.

Innerhalb des Wellbalgs bekannter Dämpfungskörper sind Haltebügel vorgesehen, die jeweils am pumpenseitigen Flansch oder am rezipientenseitigen Flansch angebracht sind und ineinandergreifen, um eine unzulässige Verlängerung des Wellbalgs zu verhindern, beispielsweise dann, wenn die Vakuumpumpe mittels des Dämpfungskörpers hängend am Rezipienten angebracht ist. Bei einer solchen Anordnung dehnt das Gewicht der Vakuumpumpe den Wellbalg, wenn sich die Vakuumpumpe nicht in Betrieb befindet und somit kein Unterdruck im Rezipienten den Wellbalg zusammenzieht. Im evakuierten Zustand des Dämpfungskörpers berühren sich die ineinandergreifenden Haltebügel nicht.

Ein Nachteil der im Inneren des Wellbalgs angebrachten Haltebügel besteht darin, dass sie den strömungstechnischen Leitwert der Verbindung zwischen Vakuumpumpe und Rezipient und damit die vakuumtechnischen Eigenschaften der gesamten Vakuumanlage verschlechtern.

Ferner kann bei einer Turbomolekularpumpe ein sogenannter Rotorcrash auftreten, beispielsweise aufgrund einer nicht vorgesehenen Berührung von Rotor- und Statorscheiben der Turbomolekularpumpe. Da Turbomolekularpumpen mit sehr hohen Drehzahlen betrieben werden und der Rotor einer Turbomolekularpumpe daher eine sehr hohe kinetische Energie aufweist, werden diese Energie und ein entsprechendes Drehmoment im Fall eines Rotorcrashs innerhalb von Millisekunden auf den Dämpfungskörper und den Rezipienten übertragen. Ferner können bei Auftreten eines Rotorcrashs auch große axiale Kräfte auftreten, welche die Flansche derart auseinanderziehen können, dass der Wellbalg aufreißt.

Es besteht somit die Gefahr, dass der Wellbalg des Dämpfungskörpers einem solchen Drehmoment und/oder solchen axialen Kräften nicht standhält und zerreißt, so dass die gesamte Turbomolekularpumpe vom Rezipienten abreißen und sich durch die Umgebung bewegen kann. Darüber hinaus können sich bei einem Rotorcrash Teile vom Rotor der Turbomolekularpumpe ablösen und sich in Richtung des Dämpfungskörpers und des Rezipienten oder frei in die Umgebung hinein bewegen, sobald die Verbindung zwischen der Turbomolekularpumpe und dem Dämpfungskörper zerstört ist.

Bei bekannten Dämpfungskörpern, die innerhalb des Wellbalgs angeordnete Haltebügel und keine anderen oder weiteren Elemente zur Sicherung aufweisen, begrenzen die Haltebügel die Verdrehung der Flansche relativ zueinander nicht in ausreichendem Maß, so dass die Haltbügel eine Beschädigung des Wellbalgs bei Auftreten eines Rotorcrashs nicht verhindern können.

Aus der DE 197 45 185 A1 ist ein Dämpfungskörper mit den Merkmalen gemäß dem Oberbegriff des Anspruchs 1 bekannt.

Die FR 2 741 418 A1 beschreibt eine Flanschverbindung mit einem Wellbalg, bei der jeweils mehrere Befestigungspositionen eines Drahtseils an einem Flansch auf einer Seite und an einem gegenüberliegenden Flansch vorgesehen sind, so dass sich das Drahtseil abwechselnd zwischen einer Befestigungsposition an einem Flansch und einer Befestigungsposition an dem gegenüberliegenden Flansch erstreckt.

Eine Aufgabe der Erfindung besteht darin, einen Dämpfungskörper der eingangs genannten Art derart weiterzuentwickeln, dass die Verbindung zwischen einer Vakuumpumpe und einem Rezipienten auch dann bestehen bleibt, wenn ein Rotorcrash innerhalb der Vakuumpumpe auftritt.

Diese Aufgabe wird durch einen Dämpfungskörper mit den Merkmalen des Anspruchs 1 gelöst.

Der Dämpfungskörper umfasst einen pumpenseitigen und einen rezipientenseitigen Flansch zur Befestigung des Dämpfungskörpers an einer Vakuumpumpe bzw. an einem Rezipienten sowie einen Wellbalg zur vakuumdichten Verbindung der beiden Flansche. Erfindungsgemäß weist der Dämpfungskörper wenigstens ein mit dem pumpenseitigen und/oder dem rezipientenseitigen Flansch verbundenes Sicherungselement auf, welches außerhalb des Wellbalgs angeordnet ist und welches eine Verdrehung und/oder ein axiales Auseinanderziehen der Flansche relativ zueinander begrenzt.

Durch die Begrenzung der relativen Verdrehung der Flansche mittels des Sicherungselements wird die Torsion begrenzt, welcher der Wellbalg bei Auftreten eines Rotorcrashs ausgesetzt wird. Mit anderen Worten begrenzt das Sicherungselement die maximale Verdrehung der Flansche auf einen solchen Winkel, dass durch die Torsion, die diesem Winkel entspricht, keine Beschädigung des Wellbalgs auftreten kann. Alternativ oder zusätzlich begrenzt das Sicherungselement die maximale Distanz, die im Fall eines Rotorcrashs in axialer Richtung zwischen den Flanschen auftritt, und damit die Kräfte, welche die Flansche in einem solchen Fall auf den Wellbalg ausüben.

Bei Auftreten eines Rotorcrashs werden das am pumpenseitigen Flansch entstehende Drehmoment und/oder die entsprechenden axialen Kräfte über das wenigstens eine Sicherungselement von der Vakuumpumpe an den Rezipienten und somit nicht an den Wellbalg übertragen. Auf diese Weise ist der Wellbalg bei Auftreten eines Rotorcrashs durch das außenliegende Sicherungselement vor einem Zerreißen geschützt.

Letztlich wird hierdurch auch die Umgebung der Vakuumpumpe und des Rezipienten vor den Gefahren eines Rotorcrashs geschützt, da keine unkontrollierte Bewegung der Vakuumpumpe insgesamt oder von deren Rotorschaufeln in die Umgebung hinein auftreten kann.

Zusätzlich kann das wenigstens eine außerhalb des Wellbalgs angeordnete Sicherungselement die Funktion der innerhalb des Wellbalgs angeordneten Haltebügel bekannter Dämpfungskörper übernehmen, nämlich das Verhindern einer unzulässigen Dehnung und/oder Verlängerung des Wellbalgs, die beispielsweise dann auftreten können, wenn die Vakuumpumpe mittels des Dämpfungskörpers hängend am Rezipienten angebracht ist.

Folglich kann erfindungsgemäß auf Haltebügel im Inneren des Wellbalgs verzichtet werden, was dem strömungstechnischen Leitwert des Dämpfungskörpers zugutekommt. Somit können durch das außenliegende Sicherungselement auch die vakuumtechnischen Eigenschaften des erfindungsgemäßen Dämpfungskörpers im Vergleich zu bekannten Dämpfungskörpern verbessert werden.

Ferner sind jeweils mehrere Befestigungspositionen des Sicherungselements an dem pumpenseitigen Flansch und an dem rezipientenseitigen Flansch vorgesehen, und das Sicherungselement erstreckt sich abwechselnd zwischen einer Befestigungsposition an dem pumpenseitigen Flansch und einer Befestigungsposition an dem rezipientenseitigen Flansch. Das Sicherungselement stellt bei dieser Ausführungsform somit mehrere Verbindungen zwischen den Flanschen her, so dass das maximale Drehmoment, das bei Auftreten eines Rotorcrashs durch das Sicherungselement gehalten werden kann, entsprechend größer ist. Dadurch wird die Verbindung zwischen der Vakuumpumpe und dem Rezipienten zusätzlich abgesichert.

Vorteilhafte Ausführungsformen der Erfindung sind in den Unteransprüchen, der Beschreibung und in den Figuren angegeben.

Gemäß einer Ausführungsform sind zumindest eine erste Befestigungsposition des Sicherungselements an dem pumpenseitigen Flansch und zumindest eine zweite Befestigungsposition des Sicherungselements an dem rezipientenseitigen Flansch vorgesehen, wobei der Abstand zwischen der ersten und zweiten Befestigungsposition ist kleiner als die Länge des Sicherungselements zwischen diesen Befestigungspositionen. Der Begriff Abstand ist hierbei im mathematischen Sinn als minimale Distanz zwischen den zwei Befestigungspositionen zu verstehen.

Vorzugsweise ist auch der axiale Abstand, d.h. in Richtung parallel zu einer Mittelachse der Flansche, kleiner als die Länge des Sicherungselements zwischen dessen Befestigungspositionen.

Das Sicherungselement stellt bei dieser Ausführungsform somit keine starre oder straffe Verbindung zwischen dem pumpenseitigen und dem rezipientenseitigen Flansch her. Stattdessen wird ein gewisses Spiel des Sicherungselements gegenüber den Flanschen zugelassen. Die Länge des Sicherungselements ist dabei vorzugsweise jedoch derart bemessen, dass bei Auftreten eines Rotorcrashs nur eine sehr geringe Torsion im Wellbalg auftritt und eine Beschädigung des Wellbalgs verhindert wird. Da bei dieser Ausführungsform keine starre oder straffe Verbindung zwischen den Flanschen mittels des Sicherungselements hergestellt wird, werden mittels des Sicherungselements nahezu keine Schwingungen zwischen den Flanschen übertragen, so dass die schwingungsentkoppelte Verbindung zwischen der Vakuumpumpe und dem Rezipienten durch das außenliegende Sicherungselement nicht beeinträchtigt wird.

Das Sicherungselement ist vorzugsweise als Drahtseil ausgebildet. Ein Drahtseil ist biegeweich und überträgt daher nahezu keine Schwingungen zwischen den Flanschen. Das Drahtseil weist dennoch eine hohe Zugfestigkeit zur Sicherung der Verbindung zwischen der Vakuumpumpe und dem Rezipienten bei Auftreten eines Rotorcrashs auf.

Alternativ kann das Sicherungselement als Kette ausgebildet sein. Im evakuierten Zustand des Dämpfungskörpers und ohne Auftreten eines Motorcrashs liegen einzelne Elemente der Kette nur lose ineinander, und sie übertragen daher nahezu keine Schwingungen zwischen den Flanschen. Eine Kette weist jedoch ebenfalls eine hohe Zugfestigkeit auf, um die Verbindung zwischen der Vakuumpumpe und dem Rezipienten bei Auftreten eines Motorcrashs zu sichern.

Gemäß einer nicht beanspruchten Ausführungsform umfasst das Sicherungselement zumindest ein steifes Sicherungsglied. Das zumindest eine steife Sicherungsglied ist bevorzugt an einem der Flansche spielfrei und an dem jeweils anderen der Flansche mit Spiel angebracht, wenn sich der Dämpfungskörper in einem evakuierten Zustand befindet. Da das Sicherungsglied in diesem Fall keine direkte Verbindung zwischen dem pumpenseitigen und dem rezipientenseitigen Flansch herstellt, werden bei dieser Ausführungsform keine Schwingungen zwischen den Flanschen übertragen, da ein Eingriff zwischen dem steifen Sicherungsglied und beiden Flanschen nur im nicht evakuierten bzw. im belüfteten Zustand des Rezipienten oder bei Auftreten eines Rotorcrashs erfolgt.

Gemäß einer weiteren nicht beanspruchten Ausführungsform umfasst das Sicherungselement zumindest ein Paar von steifen Sicherungsgliedern, von welchen das eine an einer ersten Befestigungsposition an dem pumpenseitigen Flansch und das andere an einer zweiten Befestigungsposition an dem rezipientenseitigen Flansch angebracht ist. Dabei sind die erste und zweite Befestigungsposition in Umfangsrichtung der Flansche beabstandet. Durch den Abstand der ersten und zweiten Befestigungsposition kann der Winkel der maximalen Verdrehung zwischen den Flanschen eingestellt werden, welcher bei Auftreten eines Rotorcrashs zugelassen werden kann, ohne dass der Wellbalg beschädigt wird.

Vorzugsweise sind die Sicherungsglieder jedes Paares in Umfangsrichtung der Flansche beabstandet, wenn sich der Dämpfungskörper in einem evakuierten Zustand befindet. Die Sicherungsglieder berühren einander bei dieser Ausführungsform somit nur dann, wenn eine Verdrehung der Flansche gegeneinander bei Auftreten eines Rotorcrashs erfolgt. Auf diese Weise ist sichergestellt, dass im evakuierten Zustand mittels der Sicherungsglieder keine Schwingungen zwischen den Flanschen übertragen werden.

Bevorzugt weist zumindest das eine Sicherungsglied eines Paares eine Aussparung auf, in welche ein Vorsprung des anderen Sicherungsglieds des Paares eingreift. Dabei besteht im evakuierten Zustand des Dämpfungskörpers kein direkter Kontakt zwischen den Sicherungsgliedern des Paares, so dass keine Schwingungen durch die Sicherungsglieder übertragen werden. Durch die Anordnung des Vorsprungs eines Sicherungsglieds in der Aussparung des jeweils anderen Sicherungsglieds erfolgt eine zusätzliche Sicherung in axialer Richtung, d.h. in einer Richtung parallel zur Mittelachse der Flansche. Der Wellbalg wird bei dieser Ausführungsform im Falle eines Rotorcrashs nicht nur gegen Drehmoment, sondern auch gegen eine Kraft in axialer Richtung gesichert.

Gemäß einer weiteren nicht beanspruchten Ausführungsform sind mehrere Sicherungselemente jeweils an einer ersten Befestigungsposition mit dem pumpenseitigen Flansch sowie an einer zweiten Befestigungsposition mit dem rezipientenseitigen Flansch verbunden, und der Abstand zwischen der ersten und zweiten Befestigungsposition eines Sicherungselements ist für wenigstens zwei Sicherungselemente unterschiedlich. Der Abstand bezieht sich auch hier auf die minimale Distanz zwischen der jeweiligen ersten und zweiten Befestigungsposition. Vorzugsweise ist auch der axiale Abstand zwischen der jeweiligen ersten und zweiten Befestigungsposition, d.h. in Richtung parallel zur Mittelachse der Flansche, für wenigstens zwei Sicherungselemente unterschiedlich. Durch die mehreren Sicherungselemente erfolgt eine noch bessere Absicherung des Wellbalgs gegen Zerreißen im Falle eines Rotorcrashs.

Bevorzugt umfasst der Dämpfungskörper ferner eine Manschette aus einem Elastomermaterial, die den Wellbalg umschließt und zwischen dem pumpenseitigen und dem rezipientenseitigen Flansch angeordnet ist. Die Manschette verhindert, dass der Wellbalg im Betrieb der Vakuumpumpe, d.h. im evakuierten Zustand des Rezipienten und des Dämpfungskörpers, weiter als gewünscht zusammengezogen wird. Des Weiteren verhindert die Manschette aus Elastomermaterial zumindest annähernd vollständig eine Schwingungsübertragung zwischen der Vakuumpumpe und dem Rezipienten.

Die Erfindung wird rein beispielhaft anhand der beiliegenden Figuren erläutert, die Ausführungsformen eines erfindungsgemäßen Dämpfungskörpers darstellen. Es zeigen:
- Fig. 1: (a) eine Schnittansicht und (b) eine perspektivische Ansicht eines Dämpfungskörpers gemäß dem Stand der Technik,
- Fig. 2: eine Schnittansicht eines nicht beanspruchten Dämpfungskörpers gemäß einer ersten Ausführungsform mit einem in Form eines Drahtseils ausgebildeten Sicherungselement,
- Fig. 3: eine Schnittansicht eines nicht beanspruchten Dämpfungskörpers gemäß einer zweiten Ausführungsform mit einem in Form einer Kette ausgebildeten Sicherungselement,
- Fig. 4: eine Schnittansicht eines nicht beanspruchten Dämpfungskörpers gemäß einer dritten Ausführungsform mit einem ein Flacheisen umfassenden Sicherungselement,
- Fig. 5: eine Seitenansicht eines nicht beanspruchten Dämpfungskörpers gemäß einer vierten Ausführungsform mit mehreren verschiedenartigen Sicherungselementen,
- Fig. 6: eine schematische Seitenansicht eines erfindungsgemäßen Dämpfungskörpers gemäß einer fünften Ausführungsform mit einem in Form eines umlaufenden Drahtseils ausgebildeten Sicherungselement,
- Fig. 7: eine Seitenansicht eines nicht beanspruchten Dämpfungskörpers gemäß einer sechsten Ausführungsform mit einem ein Paar von Flacheisen umfassenden Sicherungselement,
- Fig. 8: eine Seitenansicht eines nicht beanspruchten Dämpfungskörpers gemäß einer siebten Ausführungsform mit einem ein Paar von Flacheisen umfassenden Sicherungselement und
- Fig. 9: eine Seitenansicht eines nicht beanspruchten Dämpfungskörpers gemäß einer achten Ausführungsform mit einem ein Paar von Flacheisen umfassenden Sicherungselement.

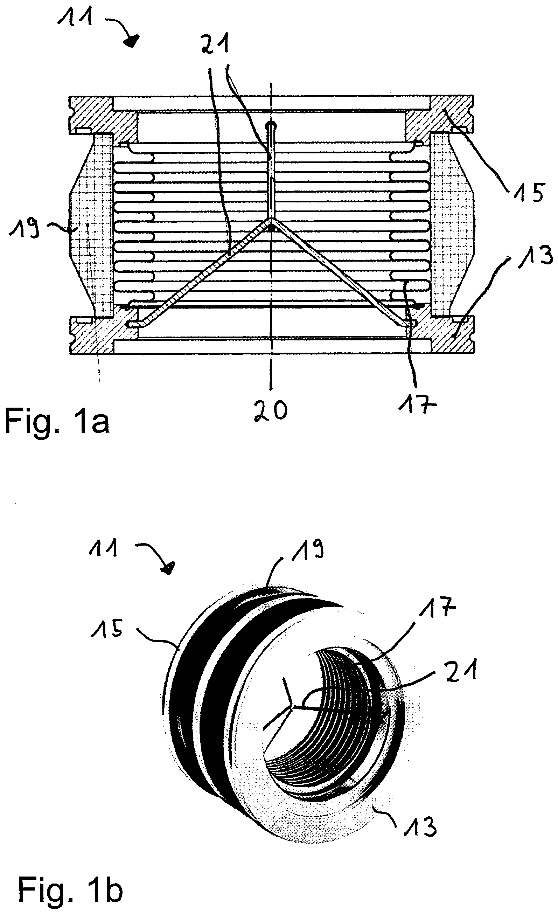

Fig. 1a und 1b zeigen einen Dämpfungskörper 11 gemäß dem Stand der Technik. Der Dämpfungskörper 11 weist einen pumpenseitigen Flansch 13 zur Befestigung des Dämpfungskörpers 11 an einer Vakuumpumpe und einen rezipientenseitigen Flansch 15 zur Befestigung des Dämpfungskörpers 11 an einem Rezipienten auf. Zwischen dem pumpenseitigen Flansch 13 und dem rezipientenseitigen Flansch 15 ist ein Wellbalg 17 angeordnet, der die Flansche 13, 15 vakuumdicht miteinander verbindet. Außenseitig ist der Wellbalg 17 von einer Manschette 19 aus einem Elastomermaterial umschlossen, welche ebenfalls zwischen dem pumpenseitigen und dem rezipientenseitigen Flansch 13, 15 angeordnet ist. Die Manschette 19 liegt im evakuierten Zustand des Dämpfungskörpers 11 stirnseitig an den Flanschen 13, 15 an und begrenzt dadurch das durch den Unterdruck im Rezipienten bedingte Zusammenziehen des Wellbalgs 17 auf ein gewünschtes Maß. Da die Manschette 19 aus Elastomermaterial besteht, verringert sie ferner die Schwingungsübertragung zwischen den Flanschen 13, 15 und somit zwischen der Vakuumpumpe und dem Rezipienten. Es sei angemerkt, dass auf die Manschette 19 grundsätzlich auch verzichtet werden, z.B. wenn der Wellbalg 17 eine ausreichende Wandstärke und Festigkeit aufweist.

Im Innenraum des Wellbalgs 17 sind ferner zwei Haltebügel 21 angeordnet, von denen der eine mit dem pumpenseitigen Flansch 13 und der andere mit dem rezipientenseitigen Flansch 15 verbunden ist. An einer Position auf einer Mittelachse 20 der Flansche 13, 15 greifen die Haltebügel 21 ineinander, um in einem nicht evakuierten Zustand des Dämpfungskörpers eine unzulässige Dehnung bzw. Verlängerung des Wellbalgs 17 zu verhindern. Eine solche Verlängerung kann beispielsweise dann auftreten, wenn die Vakuumpumpe mittels des Dämpfungskörpers 11 hängend an dem Rezipienten befestigt ist und somit das gesamte Gewicht der Vakuumpumpe auf den Dämpfungskörper 11 wirkt.

Ein Nachteil des Dämpfungskörpers 11 gemäß dem Stand der Technik ist, dass die Haltebügel 21 im Inneren des Wellbalgs 17 angeordnet sind und dadurch den strömungstechnischen Leitwert des Dämpfungskörpers 11 bzw. des Wellbalgs 17 verringern. Die Haltebügel 21 stören die Strömung des Fluids, das mittels der Vakuumpumpe durch den Dämpfungskörper 11 hindurch aus dem Rezipienten gefördert wird, wie in Fig. 1b zu erkennen ist.

Darüber hinaus schützt der Dämpfungskörper 11 gemäß dem Stand der Technik den Wellbalg 17 nicht ausreichend bei einem sogenannten Rotorcrash, bei dem ein Rotor der Vakuumpumpe, beispielsweise einer Turbomolekularpumpe, blockiert und aufgrund der hohen Drehzahl der Vakuumpumpe plötzlich ein hohes Drehmoment auf den pumpenseitigen Flansch 13 des Dämpfungskörpers 11 und den Wellbalg 17 wirkt. Da der Wellbalg 17 üblicherweise aus einem dünnen Metallblech hergestellt ist, kann er einem solchen hohen Drehmoment nicht standhalten. Dies kann zu einem Abreißen des Wellbalgs 17 von dem rezipientenseitigen Flansch 15 und somit der Vakuumpumpe vom Rezipienten führen, so dass sich die Vakuumpumpe unkontrolliert durch die Umgebung bewegen kann. Zusätzlich können sich bei einem Rotorcrash beispielsweise einer Turbomolekularpumpe Schaufeln vom Rotor der abgerissenen Turbomolekularpumpe lösen, sich ebenfalls unkontrolliert durch die Umgebung bewegen und dadurch eine weitere Gefahr darstellen.

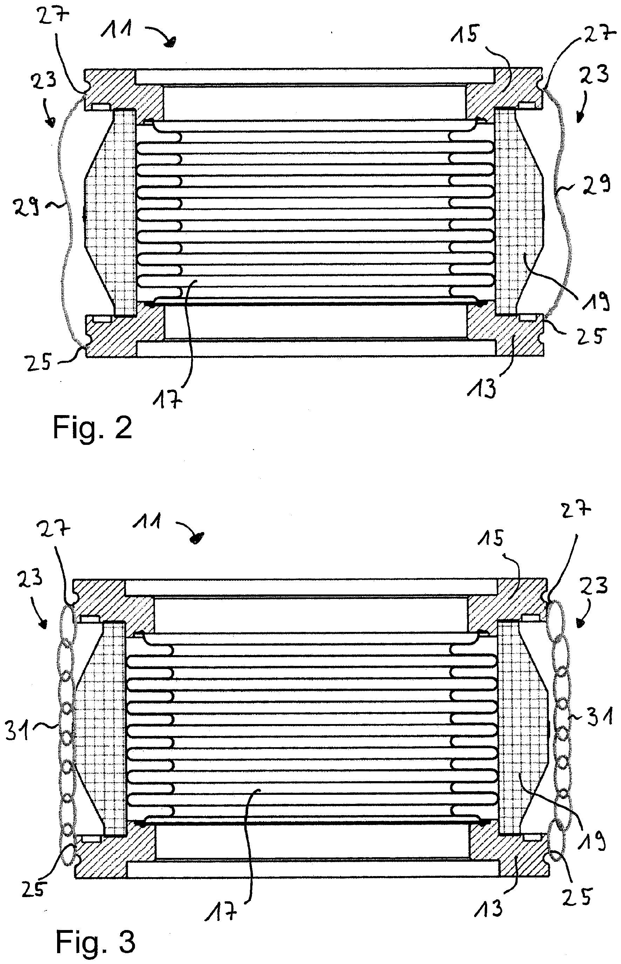

In Fig. 2 und 3 sind eine erste und zweite Ausführungsform eines nicht beanspruchten Dämpfungskörpers 11 dargestellt, welcher sich darin von dem vorstehend beschriebenen Dämpfungskörper 11 unterscheidet, dass hier keine Haltebügel 21 im Inneren des Wellbalgs 17 angeordnet sind, sondern außenliegende Sicherungselemente 23 zwischen einer ersten Befestigungsposition 25 am pumpenseitigen Flansch 13 und einer zweiten Befestigungsposition 27 am rezipientenseitigen Flansch 15 angeordnet sind. Bei der ersten Ausführungsform von Fig. 2 sind die Sicherungselemente 23 in Form von Drahtseilen 29 ausgebildet, während bei der zweiten Ausführungsform von Fig. 3 anstelle von Drahtseilen Ketten 31 vorgesehen sind.

Die Drahtseile 29 (Fig. 2) und die Ketten 31 (Fig. 3) verbinden den pumpenseitigen Flansch 13 und den rezipientenseitigen Flansch 15 jeweils an der Außenseite, d.h. außerhalb der Manschette 19 aus Elastomermaterial, die wiederum den Wellbalg 17 umschließt. Die Drahtseile 29 und Ketten 31 übernehmen die Funktion der Haltebügel 21, weshalb auf innenliegende Haltebügel 21 verzichtet werden kann, d.h. die Drahtseile 29 und die Ketten 31 sorgen im nicht evakuierten Zustand des Dämpfungskörpers 11 für eine Begrenzung der Dehnung bzw. Verlängerung des Wellbalgs 17 auf ein zulässiges Maß.

Wenn sich der Dämpfungskörper im evakuierten Zustand befindet und solange kein Rotorcrash auftritt, sind die Drahtseile 29 bzw. die Ketten 31 nicht straff zwischen dem pumpenseitigen Flansch 13 und dem rezipientenseitigen Flansch 15 gespannt. Stattdessen ist ihre Länge etwas größer als der mathematische Abstand zwischen der ersten und zweiten Befestigungsposition 25, 27. Da die Drahtseile 29 biegeweich sind und die einzelnen Glieder der Ketten 31 im evakuierten Zustand des Dämpfungskörpers 11 lose aneinander liegen, übertragen weder die Drahtseile 29 noch die Ketten 31 Schwingungen von dem pumpenseitigen Flansch 13 auf den rezipientenseitigen Flansch 15. Die schwingungsentkoppelte Verbindung zwischen der Vakuumpumpe und dem Rezipienten, für die der Dämpfungskörper 11 vorgesehen ist, wird durch die Drahtseile 29 und die Ketten 31 somit nicht beeinträchtigt.

Wenn ein Rotorcrash in der Vakuumpumpe auftritt und ein Drehmoment auf den pumpenseitigen Flansch 13 wirkt, werden der pumpenseitige Flansch 13 und der rezipientenseitige Flansch 15 gegeneinander verdreht, bis die Drahtseile 29 und die Ketten 31 derart gespannt sind, dass keine weitere Verdrehung des pumpenseitigen Flansches 13 gegenüber dem rezipientenseitigen Flansch 15 möglich ist. Dadurch wird die Torsion begrenzt, welche der Wellbalg 17 im Inneren des Dämpfungskörpers 11 erfährt. Die Länge der Drahtseile 29 bzw. der Ketten 31 ist dabei derart bemessen, dass der Wellbalg 17 durch die maximal auftretende Torsion aufgrund der Verdrehung des pumpenseitigen Flansches 13 gegenüber dem rezipientenseitigen Flansch 15 nicht beschädigt wird.

Mittels der außenliegenden Sicherungselemente 23 am Dämpfungskörper 11, d.h. mittels der Drahtseile 29 bzw. der Ketten 31, wird im Fall eines Rotorcrashs somit ein Zerreißen des Wellbalgs 17 und folglich ein Abreißen der Vakuumpumpe vom Rezipienten verhindert. Stattdessen wird das von der Vakuumpumpe ausgeübte Drehmoment über die Drahtseile 29 bzw. die Ketten 31 gewissermaßen am Wellbalg 17 vorbei an den rezipientenseitigen Flansch 15 und somit letztlich an den Rezipienten übertragen.

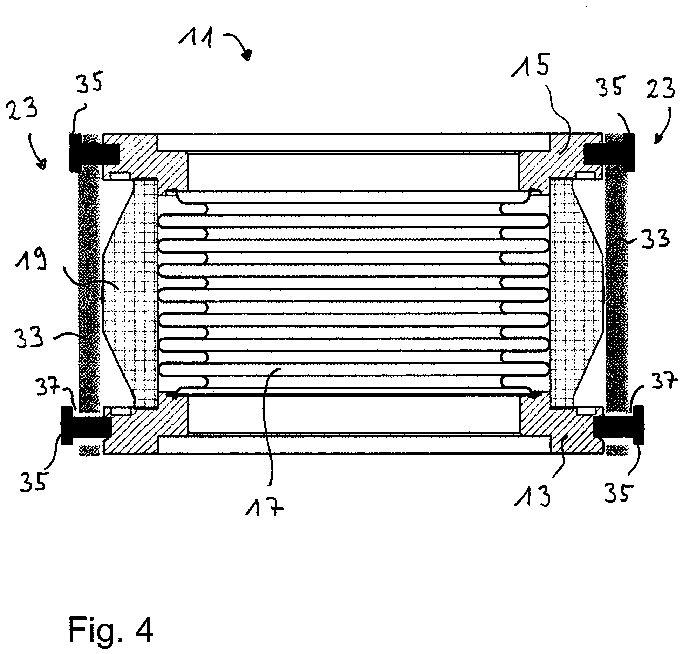

In Fig. 4 ist eine dritte Ausführungsform eines nicht beanspruchten Dämpfungskörpers 11 dargestellt, bei welcher die Sicherungselemente 23 durch steife Flacheisen 33 gebildet sind, die jeweils mittels Schrauben 35 am pumpenseitigen Flansch 13 und am rezipientenseitigen Flansch 15 befestigt sind. Die Flacheisen 33 sind jedoch nur am rezipientenseitigen Flansch 15 spielfrei befestigt. Am pumpenseitigen Flansch 13 ist im evakuierten Zustand des Dämpfungskörpers 11 hingegen ein umlaufender Spalt 37 zwischen den Flacheisen 33 und den jeweiligen Schrauben 35 vorgesehen. Die Schrauben 35 und die Flacheisen 33 berühren sich aufgrund der Spalte 37 am pumpenseitigen Flansch 13 nicht, da der Kopf der jeweiligen Schraube 35 im Gegensatz zur Befestigung am rezipientenseitigen Flansch 15 vom jeweiligen Flacheisen 33 beabstandet ist und die jeweiligen Schraubenlöcher der Flacheisen 33 am pumpenseitigen Flansch 13 einen größeren Durchmesser aufweisen als am rezipientenseitigen Flansch 15. Dadurch wird im evakuierten Zustand des Dämpfungskörpers eine Übertragung von Schwingungen vom pumpenseitigen Flansch 13 über die Flacheisen 33 an den rezipientenseitigen Flansch 15 verhindert, so dass auch hier die schwingungsentkoppelte Verbindung zwischen der Vakuumpumpe und dem Rezipienten durch die außenliegenden Sicherungselemente 23, d.h. die Flacheisen 33, nicht beeinträchtigt wird.

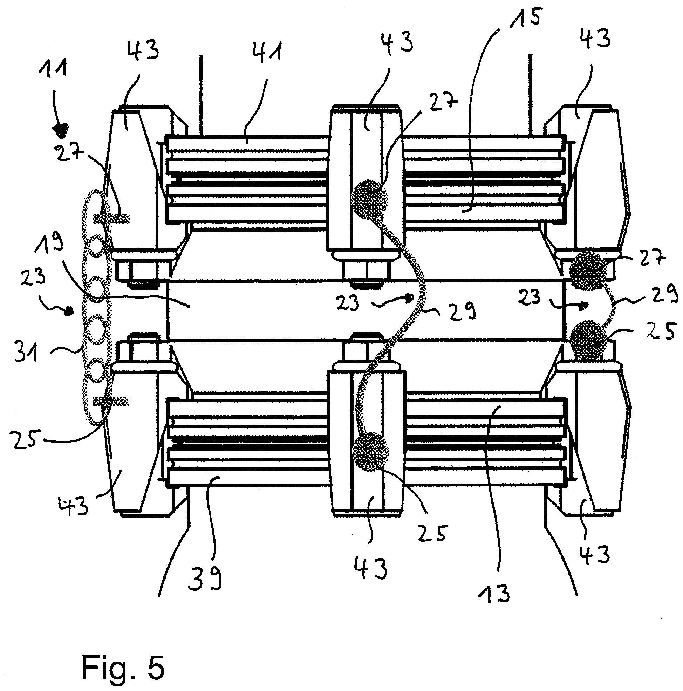

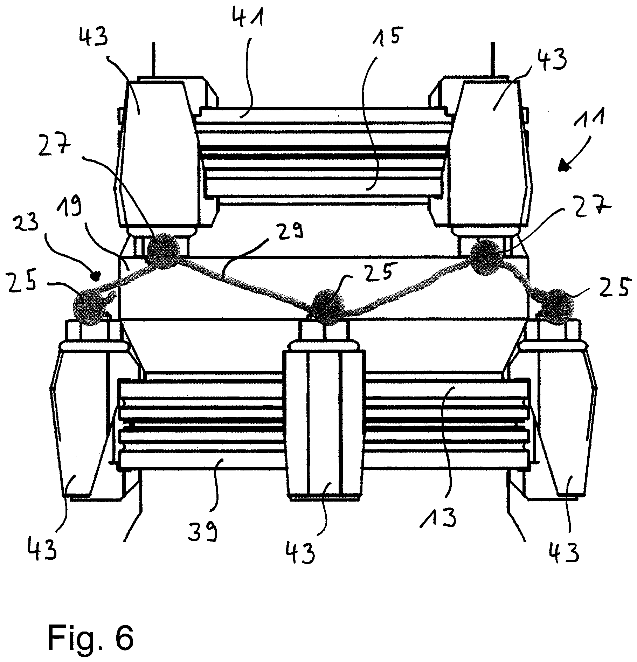

Fig. 5 und 7 bis 9 zeigen jeweils eine Seitenansicht weiterer nicht beanspruchten Ausführungsformen des Dämpfungskörpers 11. Fig. 6 zeigt eine Seitenansicht einer Ausführungsform des erfindungsgemäßen Dämpfungskörpers 11. Der Dämpfungskörper 11 ist dabei am pumpenseitigen Flansch 13 mit einem Flansch 39 einer nicht gezeigten Vakuumpumpe, beispielsweise einer Turbomolekularpumpe, verbunden, während er am rezipientenseitigen Flansch 15 mit einem Flansch 41 eines ebenfalls nicht gezeigten Rezipienten verbunden ist. Die Verbindung der Flansche 13 und 39 bzw. der Flansche 15 und 41 erfolgt dabei jeweils mittels Klammerschrauben 43.

Bei der in Fig. 5 dargestellten vierten Ausführungsform sind an der Außenseite des Dämpfungskörpers 11 zwischen einer jeweiligen ersten Befestigungsposition 25 und einer jeweiligen zweiten Befestigungsposition 27 drei Varianten des Sicherungselements 23 gezeigt. Die Befestigungspositionen 25, 27 befinden sich an den Klammerschrauben 43, die jeweils mit dem pumpenseitigen Flansch 13 bzw. mit dem rezipientenseitigen Flansch 15 verbunden sind.

Bei der ersten Variante, die in Fig. 5 auf der linken Seite dargestellt ist, ist ähnlich wie bei der Ausführungsform von Fig. 3 eine Kette 31 mit einer jeweiligen Klammerschraube 43 am pumpenseitigen bzw. rezipientenseitigen Flansch 13, 15 verbunden. Die Befestigung der Kette 31 erfolgt dabei in einem mittleren Abschnitt an der Außenseite der jeweiligen Klammerschraube 43. Bei der zweiten und dritten Variante, die in Fig. 5 in der Mitte bzw. auf der rechten Seite gezeigt sind, ist jeweils ein Drahtseil 29 an einer jeweiligen Klammerschraube 43 am pumpenseitigen bzw. rezipientenseitigen Flansch 13, 15 befestigt, und zwar ähnlich wie bei der in Fig. 2 gezeigten Ausführungsform. Die zweite und dritte Variante unterscheiden sich durch den Abstand der Befestigungspositionen 25, 27 und entsprechend durch die Länge der Drahtseile 29. Während bei der zweiten Variante ähnlich wie bei der ersten Variante eine Befestigung des Drahtseils im mittleren Abschnitt der jeweiligen Klammerschraube 43 vorgesehen ist, befinden sich die Befestigungspositionen 25, 27 bei der dritten Variante am unteren bzw. oberen Rand der jeweiligen Klammerschraube 43.

Da die Abstände zwischen der ersten Befestigungsposition 25 und der jeweils zugeordneten zweiten Befestigungsposition 27 für die verschiedenen Sicherungselemente 23 gemäß den drei Varianten unterschiedlich sind, erhält man eine gewisse Freiheit der Anbringung der Sicherungselemente 23 in Abhängigkeit vom vorhandenen Raum in der Umgebung des Dämpfungskörpers 11, noch dazu da die Klammerschrauben 43 in Umfangsrichtung der Flansche 13, 39 bzw. 15, 41 verschiebbar sind. Die drei in Fig. 5 gezeigten Varianten des Sicherungselements 23 können als Alternativen oder in Kombination verwendet werden, d.h. es können unterschiedliche Sicherungselemente 23 mit unterschiedlichen Abständen zwischen den Befestigungspositionen 25, 27 an jeweiligen Paaren von Klammerschrauben angeordnet werden. Dies erhöht die Flexibilität für die Verwendung der Sicherungselemente 23.

Beim Auftreten eines Rotorcrashs verdrehen sich der pumpenseitige Flansch 13 und der rezipientenseitige Flansch 15 und damit die an diesen angebrachten Klammerschrauben 43 gegeneinander, bis die Sicherungselemente 23, d.h. die Drahtseile 29 und die Kette 31, gespannt sind und keine weitere Verdrehung zulassen. Solange kein Rotorcrash auftritt und sich der Dämpfungskörper im evakuierten Zustand befindet, sind die Sicherungselemente 23 nicht straff gespannt, damit sie keine Schwingungen vom pumpenseitigen Flansch 13 bzw. von der Vakuumpumpe an den rezipientenseitigen Flansch 15 bzw. an den Rezipienten übertragen. Das Vorhandensein mehrerer Sicherungselemente 23, die jeweils zwischen unterschiedlich beabstandeten ersten Befestigungspositionen 25 und zweiten Befestigungspositionen 27 angeordnet sind, schützt noch besser vor einem Zerreißen des Wellbalgs 17 bei einem Rotorcrash.

Bei der in Fig. 6 dargestellten fünften Ausführungsform ist das Sicherungselement 23 in Form eines Drahtseils 29 ausgebildet, das sich erfindungsgemäß abwechselnd zwischen einer jeweiligen ersten Befestigungsposition 25 am pumpenseitigen Flansch 13 und einer zweiten Befestigungsposition 27 am rezipientenseitigen Flansch 15 erstreckt. Das Drahtseil 29 verläuft sozusagen im "Zickzack" um den Umfang des Dämpfungskörpers 11 herum. Die Befestigungspositionen 25, 27 befinden sich dabei wiederum an jeweiligen Klammerschrauben 43.

Da das Drahtseil 29 eine Vielzahl von Verbindungsabschnitten zwischen den ersten und zweiten Befestigungspositionen 25, 27 herstellt, kann das Drahtseil 29 im Fall eines Rotorcrashs ein größeres Drehmoment aufnehmen. Folglich ist der Wellbalg 17 bzw. die Verbindung zwischen der Vakuumpumpe und dem Rezipienten bei einem Rotorcrash noch besser geschützt.

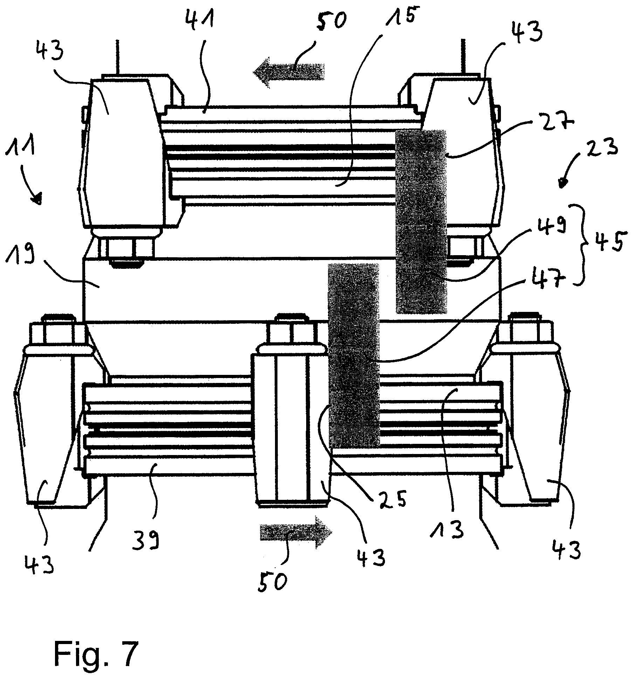

Bei den in Fig. 7 bis 9 dargestellten weiteren Ausführungsformen des Dämpfungskörpers 11 umfasst das Sicherungselement 23 jeweils ein Paar 45 von steifen Sicherungsgliedern, die als ein erstes Flacheisen 47, das mit dem pumpenseitigen Flansch 13 in Verbindung steht, und als ein zweites Flacheisen 49, das mit dem rezipientenseitigen Flansch 15 in Verbindung steht, ausgebildet sind. Das erste Flacheisen 47 und das zweite Flacheisen 49 sind dabei jeweils an einer Klammerschraube 43 befestigt, welche den pumpenseitigen Flansch 13 mit dem Flansch 39 der Vakuumpumpe bzw. den rezipientenseitigen Flansch 15 mit dem Flansch 41 des Rezipienten verbindet. Die Befestigungspositionen 25 des ersten Flacheisens 47 befindet sich somit an einer Klammerschraube 43, die mit dem pumpenseitigen Flansch 13 in Verbindung steht, während sich die Befestigungsposition 27 des zweiten Flacheisens 49 an einer Klammerschraube 43 befindet, die mit dem rezipientenseitigen Flansch 15 in Verbindung steht.

Alternativ ist es auch möglich, die Flacheisen 47, 49 direkt am jeweiligen Flansch 13 bzw. 15 zu befestigen. Die Befestigung der Sicherungselemente 23 an den Klammerschrauben 43 hat jedoch grundsätzlich den Vorteil, dass bestehende Dämpfungskörper (wie beispielsweise der in Fig. 1a und 1b gezeigte Dämpfungskörper 11 gemäß dem Stand der Technik) mit Sicherungselementen 23 nachgerüstet werden können, die jeweils zwischen den Klammerschrauben 43 angeordnet sind. Mit anderen Worten stellen die Klammerschrauben 43 mit dazwischen angeordneten Sicherungselementen 23 ein kostengünstiges Zubehör zur Nachrüstung eines Dämpfungskörpers 11 dar.

Solange kein Rotorcrash in der Vakuumpumpe auftritt, berühren sich die Flacheisen 47, 49 nicht, damit keine Schwingungsübertragung zwischen dem pumpenseitigen Flansch 13 und dem rezipientenseitigen Flansch 15 erfolgen kann. Im Fall eines Rotorcrashs werden der pumpenseitige Flansch 13 und der rezipientenseitige Flansch 15 aufgrund des Drehmoments der Vakuumpumpe gegeneinander verdreht, wie dies durch die Pfeile 50 dargestellt ist. Die Verdrehung der Flansche 13, 15 gegeneinander endet jedoch, sobald das erste Flacheisen 47 und das zweite Flacheisen 49 einander berühren und dadurch das Drehmoment vom pumpenseitigen Flansch 13 auf den rezipientenseitigen Flansch 15 übertragen wird.

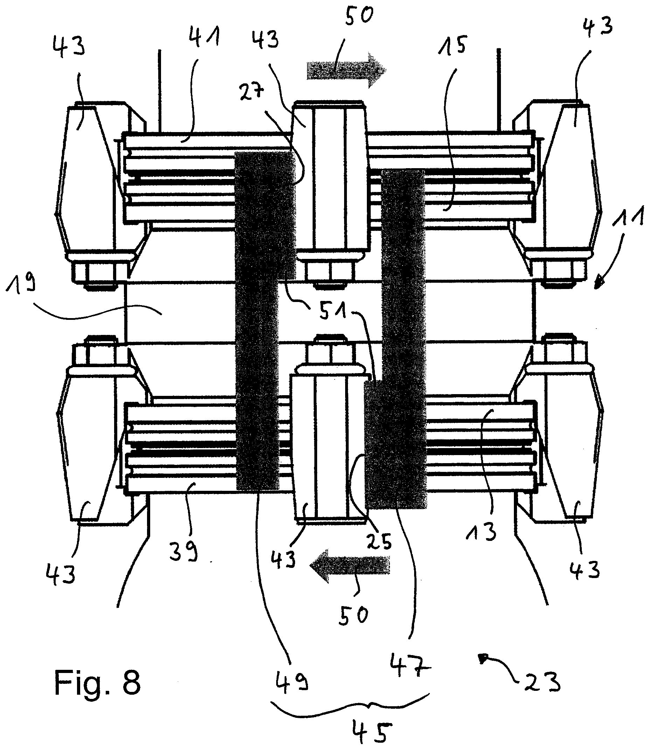

Die in Fig. 8 dargestellte siebte Ausführungsform weist im Gegensatz zur in Fig. 7 dargestellten sechsten Ausführungsform ein erstes Flacheisen 47 und ein zweites Flacheisen 49 mit einer jeweiligen Stufe 51 auf, an welche sich ein verlängerter Abschnitt mit verringerter Breite des jeweiligen Flacheisens 47, 49 anschließt. Durch die geometrischen Abmessungen der Stufe 51, insbesondere durch den Abstand der Abschnitte mit verringerter Breite, kann der Winkel vorgegeben werden, um welchen der pumpenseitige Flansch 13 und der rezipientenseitige Flansch 15 maximal gegeneinander verdrehen können, bis sich die Flacheisen 47, 49 berühren und eine weitere Verdrehung verhindern.

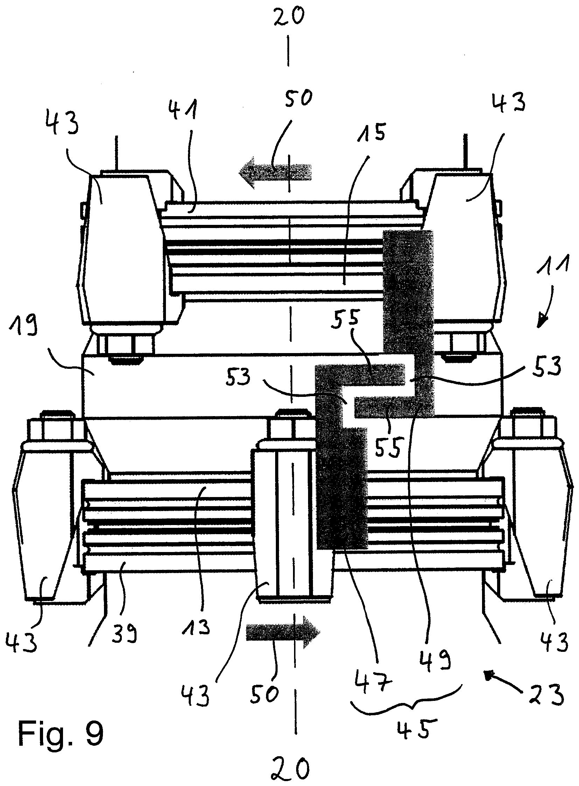

Bei der in Fig. 9 dargestellten achten Ausführungsform eines Dämpfungskörpers 11 weisen das erste Flacheisen 47 und das zweite Flacheisen 49 jeweils eine Aussparung 53 auf, in welche ein Vorsprung 55 des jeweils anderen Flacheisens 47, 49 eingreift. In einem normalen evakuierten Betriebszustand berühren sich die Flacheisen 47, 49 nicht, so dass keine Schwingungsübertragung über die Flacheisen 47, 49 erfolgt. Bei einem Rotorcrash hingegen gelangen die jeweiligen Aussparungen 53 und Vorsprünge 55 des ersten und zweiten Flacheisens 47, 49 in Kontakt, so dass eine Verdrehung des pumpenseitigen Flanschs 13 relativ zu dem rezipientenseitigen Flansch 15 begrenzt wird. Zusätzlich wirken die Aussparungen 53 zusammen mit den Vorsprüngen 55 als eine axiale Sicherung, da eine Verschiebung des pumpenseitigen Flanschs 13 relativ zu dem rezipientenseitigen Flansch 15 in axialer Richtung, d.h. in einer Richtung parallel zur Mittelachse 20 der Flansche 13, 15, begrenzt wird. Ähnlich wie bei den in Fig. 2 bis 6 dargestellten Ausführungsformen mit Drahtseilen 29 bzw. Ketten 31 wird durch die zusätzliche axiale Sicherung die maximale Dehnung bzw. Verlängerung des Wellbalgs 17 in dem Fall begrenzt, dass sich der Dämpfungskörper nicht im evakuierten Zustand befindet und die Vakuumpumpe hängend an dem Rezipienten befestigt ist.

### Bezugszeichenliste

- 11: Dämpfungskörper
- 13: pumpenseitiger Flansch
- 15: rezipientenseitiger Flansch
- 17: Wellbalg
- 19: Manschette
- 20: Mittelachse
- 21: Haltebügel
- 23: Sicherungselement
- 25: erste Befestigungsposition
- 27: zweite Befestigungsposition
- 29: Drahtseil
- 31: Kette
- 33: Flacheisen
- 35: Schraube
- 37: Spalt
- 39: Flansch der Turbomolekularpumpe
- 41: Flansch des Rezipienten
- 43: Klammerschraube
- 45: Paar von steifen Sicherungsgliedern
- 47: erstes Flacheisen
- 49: zweites Flacheisen
- 50: Pfeil
- 51: Stufe
- 53: Aussparung
- 55: Vorsprung

## Patentansprüche

1. Dämpfungskörper (11) für eine schwingungsentkoppelte Verbindung einer Vakuumpumpe, insbesondere einer Turbomolekularpumpe, mit einem Rezipienten, mit
einem pumpenseitigen Flansch (13) zur Befestigung des Dämpfungskörpers (11) an der Vakuumpumpe,
einem rezipientenseitigen Flansch (15) zur Befestigung des Dämpfungskörpers (11) an dem Rezipienten
einem Wellbalg (17), mittels welchem der pumpenseitige Flansch (13) und der rezipientenseitige Flansch (15) vakuumdicht miteinander verbunden sind, und
wenigstens einem mit dem pumpenseitigen und dem rezipientenseitigen Flansch (13, 15) verbundenen Sicherungselement (23), welches außerhalb des Wellbalgs (17) angeordnet ist und welches eine Verdrehung und/oder ein axiales Auseinanderziehen der Flansche (13, 15) relativ zueinander begrenzt,
**gekennzeichnet durch**
jeweils mehrere Befestigungspositionen (25, 27) des Sicherungselements (23) an dem pumpenseitigen Flansch (13) und an dem rezipientenseitigen Flansch (15),
wobei sich das Sicherungselement (23) abwechselnd zwischen einer Befestigungsposition (25) an dem pumpenseitigen Flansch (13) und einer Befestigungsposition (27) an dem rezipientenseitigen Flansch (15) erstreckt und
wobei sich die Befestigungspositionen (25, 27) an jeweiligen Klammerschrauben (43) befinden, die an dem pumpenseitigen Flansch (13) und an dem rezipientenseitigen Flansch (15) angebracht sind.

2. Dämpfungskörper (11) nach Anspruch 1,
**gekennzeichnet durch**
zumindest eine erste Befestigungsposition (25) des Sicherungselements (23) an dem pumpenseitigen Flansch (13) und zumindest eine zweite Befestigungsposition (27) des Sicherungselements (23) an dem rezipientenseitigen Flansch (15), wobei der Abstand zwischen der ersten und zweiten Befestigungsposition (25, 27) kleiner als die Länge des Sicherungselements (23) zwischen diesen Befestigungspositionen (25, 27) ist.

3. Dämpfungskörper (11) nach Anspruch 1 oder 2,
**dadurch gekennzeichnet, dass** das Sicherungselement (23) als Drahtseil (29) ausgebildet ist.

4. Dämpfungskörper (11) nach Anspruch 1 oder 2,
**dadurch gekennzeichnet, dass** das Sicherungselement (23) als Kette (31) ausgebildet ist.

5. Dämpfungskörper (11) nach zumindest einem der vorstehenden Ansprüche,
**dadurch gekennzeichnet, dass** mehrere Sicherungselemente (23) jeweils an einer ersten Befestigungsposition (25) mit dem pumpenseitigen Flansch (13) sowie an einer zweiten Befestigungsposition (27) mit dem rezipientenseitigen Flansch (15) verbunden sind, wobei der Abstand zwischen der ersten und zweiten Befestigungsposition (25, 27) eines Sicherungselements (23) für wenigstens zwei Sicherungselemente (23) unterschiedlich ist.

6. Dämpfungskörper (11) nach zumindest einem der vorstehenden Ansprüche,
**gekennzeichnet durch**
eine Manschette (19) aus einem Elastomermaterial, die den Wellbalg (17) umschließt und zwischen dem pumpenseitigen und dem rezipientenseitigen Flansch (13, 15) angeordnet ist.

## Claims

1. A damping body (11) for a vibration-decoupled connection of a vacuum pump, in particular a turbomolecular pump, to a recipient, said damping body (11) comprising
a pump-side flange (13) for fastening the damping body (11) to the vacuum pump;
a recipient-side flange (15) for fastening the damping body (11) to the recipient;
a corrugated bellows (17) by means of which the pump-side flange (13) and the recipient-side flange (15) are connected to one another in a vacuum-tight manner; and
at least one securing element (23) which is connected to the pump-side flange and the recipient-side flange (13, 15), which is arranged outside the corrugated bellows (17) and which limits a rotation and/or an axial pulling apart of the flanges (13, 15) relative to one another,
**characterized by**
a respective plurality of fastening positions (25, 27) of the securing element (23) at the pump-side flange (13) and at the recipient-side flange (15),
wherein the securing element (23) extends alternately between a fastening position (25) at the pump-side flange (13) and a fastening position (27) at the recipient-side flange (15), and
wherein the fastening positions (25, 27) are located at respective clamp screws (43) which are attached to the pump-side flange (13) and to the recipient-side flange (15).

2. A damping body (11) in accordance with claim 1,
**characterized by**
at least a first fastening position (25) of the securing element (23) at the pump-side flange (13) and at least a second fastening position (27) of the securing element (23) at the recipient-side flange (15), with the spacing between the first and second fastening positions (25, 27) being smaller than the length of the securing element (23) between these fastening positions (25, 27).

3. A damping body (11) in accordance with claim 1 or claim 2, **characterized in that**
the securing element (23) is configured as a wire rope (29).

4. A damping body (11) in accordance with claim 1 or claim 2, **characterized in that**
the securing element (23) is configured as a chain (31).

5. A damping body (11) in accordance with at least one of the preceding claims,
**characterized in that**
a plurality of securing elements (23) are each connected at a first fastening position (25) to the pump-side flange (13) and at a second fastening position (27) to the recipient-side flange (15), with the spacing between the first and second fastening positions (25, 27) of a securing element (23) being different for at least two securing elements (23).

6. A damping body (11) in accordance with at least one of the preceding claims,
**characterized by**
a sleeve (19) which is composed of an elastomer material, which encloses the corrugated bellows (17) and which is arranged between the pump-side flange (13) and the recipient-side flange (15).

## Revendications

1. Corps d'amortissement (11) pour une liaison à découplage vibratoire d'une pompe à vide, en particulier d'une pompe turbomoléculaire, avec un récipient, comportant
une bride (13) côté pompe pour la fixation du corps d'amortissement (11) sur la pompe à vide,
une bride (15) côté récipient pour la fixation du corps d'amortissement (11) sur le récipient,
un soufflet ondulé (17), au moyen duquel la bride (13) côté pompe et la bride (15) côté récipient sont reliées entre elles de manière étanche au vide, et
au moins un élément de blocage (23) relié aux brides (13, 15) côté pompe et côté récipient, qui est disposé à l'extérieur du soufflet ondulé (17) et qui limite une rotation et/ou un écartement axial des brides (13, 15) l'une par rapport à l'autre,
**caractérisé par**
plusieurs positions de fixation (25, 27) respectives de l'élément de blocage (23) sur la bride (13) côté pompe et sur la bride (15) côté récipient, l'élément de blocage (23) s'étendant en alternance entre une position de fixation (25) sur la bride (13) côté pompe et une position de fixation (27) sur la bride (15) côté récipient, et
les positions de fixation (25, 27) se situent sur des boulons-agrafes respectifs (43) qui sont montés sur la bride (13) côté pompe et sur la bride (15) côté récipient.

2. Corps d'amortissement (11) selon la revendication 1,
**caractérisé par**
au moins une première position de fixation (25) de l'élément de blocage (23) sur la bride (13) côté pompe et au moins une deuxième position de fixation (27) de l'élément de blocage (23) sur la bride (15) côté récipient, la distance entre les première et deuxième positions de fixation (25, 27) étant inférieure à la longueur de l'élément de blocage (23) entre lesdites positions de fixation (25, 27).

3. Corps d'amortissement (11) selon la revendication 1 ou 2,
**caractérisé en ce que**
l'élément de blocage (23) est réalisé sous forme de câble métallique (29).

4. Corps d'amortissement (11) selon la revendication 1 ou 2,
**caractérisé en ce que**
l'élément de blocage (23) est réalisé sous forme de chaîne (31).

5. Corps d'amortissement (11) selon l'une au moins des revendications précédentes,
**caractérisé en ce que**
plusieurs éléments de blocage (23) respectifs sont reliés à la bride (13) côté pompe, à une première position de fixation (25), ainsi qu'à la bride (15) côté récipient, à une deuxième position de fixation (27), la distance entre les première et deuxième positions de fixation (25, 27) d'un élément de blocage (23) étant différente pour au moins deux éléments de blocage (23).

6. Corps d'amortissement (11) selon l'une au moins des revendications précédentes,
**caractérisé par**
une manchette (19) en matériau élastomère, qui entoure le soufflet ondulé (17) et qui est disposée entre les brides (13, 15) côté pompe et côté récipient.
